# EUROPÄISCHE PATENTSCHRIFT

(11) **EP 1 352 702 B1**
(45) Veröffentlichungstag und Bekanntmachung des Hinweises auf die Patenterteilung: **10.01.2007**
(21) Anmeldenummer: 02025581.6
(22) Anmeldetag: 15.11.2002
(51) Int. Cl.: B23Q 1/26, B23B 39/16

(54) **Spindelaggregat mit einer Verriegelungseinrichtung zum Festsetzen der Spindelhülse**
Spindles assembly with a locking device for fixing the spindle sleeves
Unité à broches avec dispositif de vérrouillage pour fixer les douilles des broches

(30) Priorität: 03.04.2002 DE 10214697; 24.04.2002 DE 10218291
(43) Veröffentlichungstag der Anmeldung: 15.10.2003
(73) Patentinhaber: Weeke Bohrsysteme GmbH, 33442 Herzebrock-Clarholz (DE)
(72) Erfinder: Kortenjan, Peter, 33442 Herzebrock-Clarholz (DE)
(74) Vertreter: HOFFMANN EITLE

(56) Entgegenhaltungen:
- DE-A1- 10 107 861
- DE-A1- 19 829 814
- PATENT ABSTRACTS OF JAPAN vol. 006, no. 048 (M-119), 27 March 1982 (1982-03-27) -& JP 56 163814 A (SANSHIN IND CO LTD; OTHERS: 01), 16 December 1981 (1981-12-16)

## Beschreibung

### Technisches Gebiet

Die vorliegende Erfindung bezieht sich auf ein Spindelaggregat, insbesondere für die Bearbeitung plattenförmiger Werkstücke, das ein Gehäuse, mindestens eine darin angeordnete Spindelhülse, in der jeweils eine Spindel axialfest und drehfrei gelagert ist, einen Verstellantrieb zum Verstellen der Spindelhülse zwischen einer Ruhestellung und einer Arbeitsstellung, und eine Verriegelungseinrichtung zum Festsetzen der Spindelhülse in dem Gehäuse umfasst.

### Stand der Technik

Im Stand der Technik ist es bekannt, derartige Spindelaggregate für die Bearbeitung, insbesondere das Bohren plattenförmiger Werkstücke wie beispielsweise Möbelfronten, Korpusteile, Paneele, Isolier- bzw. Bauplatten oder dergleichen zu verwenden. Dabei werden häufig mehrere Spindelaggregate parallel zu einer Bearbeitungseinheit zusammengefasst, die als Ganzes zur Bearbeitung verfahren werden kann und die Spindeln antreibt. In Abhängigkeit von dem durchzuführenden Bearbeitungsvorgang, beispielsweise der erforderlichen Anzahl bzw. dem erforderlichen Abstand von Bohrlöchern, kommen alle oder nur ein Teil der Spindelaggregate einer Bearbeitungseinheit gleichzeitig zum Einsatz.

Zu diesem Zweck werden die für die jeweilige Bearbeitung erforderlichen Spindeln zunächst von einer Ruhestellung in eine Arbeitsstellung verstellt und in dieser festgesetzt. Der eigentliche Bearbeitungsvorgang erfolgt dann durch Verfahren der gesamten Bearbeitungseinheit gegenüber dem Werkstück, wobei jedoch nur die in der Arbeitsstellung befindlichen Spindelaggregate das Werkstück bearbeiten.

Das Verfahren der Spindeln von der Ruhestellung in die Arbeitsstellung und umgekehrt wird im Stand der Technik meist durch einen pneumatischen Verstellantrieb realisiert, wie beispielsweise der DE 198 29 814 A1 zu entnehmen ist. Das Festsetzen der Spindel in der Arbeitsstellung durch von außen eingreifende Sperren, Verriegelungen oder dergleichen ist insbesondere bei Bearbeitungseinheiten mit eng angeordneten Spindeln schwierig zu realisieren. Daher erfolgt das Festsetzen der Spindel in der Arbeitsstellung häufig ebenfalls pneumatisch oder durch Federelemente (DE 198 29 814 A1). Beide Vorgehensweisen besitzen den Nachteil, das sich die Spindel gegenüber der Bearbeitungseinheit während der Bearbeitung des Werkstücks elastisch verschieben kann. Dabei ist zu beachten, dass die bei der Bearbeitung in axialer Richtung auftretenden Reaktionskräfte, die vollständig von der Festsetzung der Spindel übertragen werden müssen, je nach Werkstück und Bearbeitungsgeschwindigkeit in der Größenordnung von 50 kp liegen können.

Um die Steifigkeit der pneumatischen Festsetzung der Spindel zu erhöhen, ist es prinzipiell möglich, den pneumatischen Betriebsdruck zu erhöhen. Dies führt jedoch mit zunehmendem Druck zu Problemen bei der Abdichtung des pneumatischen Kreislaufs, ohne letztlich die Nachgiebigkeit der Spindellagerung zu beseitigen.

Ein weiterer Weg zur Beseitigung der Nachgiebigkeit der Spindellagerung ist aus der DE 101 07 861 A1 bekannt. In dieser Druckschrift wird vorgeschlagen, zum Festsetzen der Spindel bzw. der Spindelhülse in dem Gehäuse ein Klemmstück anzuordnen, das mittels Fluiddruck in eine selbsthemmende Klemmlage, d. h. in einen Kraftschluss, bringbar ist. Um das Klemmstück in die Klemmlage zu bringen, ist zusätzlich zu dem Verstellantrieb der Spindel eine weitere Verstelleinrichtung, die ebenfalls pneumatisch sein kann, erforderlich. Auf diese Weise werden Konstruktion und Steuerung des Spindelaggregats bzw. der gesamten Bearbeitungseinheit komplizierter. So sind beispielsweise bei pneumatischer Verstellung des Klemmstücks vier anstelle von zwei pneumatischen Anschlüssen je Spindelaggregat erforderlich. Auch gewährleistet der in der DE 101 07 861 A1 offenbarte, auf Kraftschluss basierende Aufbau keine genau definierte Positionierung der Spindel.

### Darstellung der Erfindung

Es ist daher eine Aufgabe der vorliegenden Erfindung, die Nachteile des Standes der Technik zu beseitigen und ein Spindelaggregat mit einer Einrichtung zum Festsetzen der Spindelhülse in dem Gehäuse bereitzustellen, die eine einfache Konstruktion besitzt und einfach zu steuern ist. Diese Aufgabe wird erfindungsgemäß durch das Spindelaggregat mit einer Verriegelungseinrichtung zum Festsetzen der Spindelhülse nach Anspruch 1 gelöst.

Der Erfindung liegt der Gedanke zugrunde, dass das Festsetzen der Spindelhülse in dem Gehäuse formschlüssig durch Verriegelung erfolgt, wobei die entsprechende Verriegelungseinrichtung nicht von außerhalb des Spindelgehäuses in die Spindelhülse eingreift, sondern sich zwischen der Innenfläche des Spindelgehäuses und der Außenfläche der Spindelhülse befindet.

Die mit der Erfindung erreichten Vorteile bestehen insbesondere darin, dass sich dank des formschlüssigen Festsetzens eine unnachgiebige, genau definierte Positionierung der Spindelhülse bzw. der Spindel in ihrer Arbeitsstellung in dem Spindelgehäuse ergibt. Hierdurch wird auch das Aufbringen hoher Bearbeitungskräfte ohne Relativverschiebung der Spindel ermöglicht. Gleichzeitig erlaubt die vorteilhafte Anordnung der Verriegelungseinrichtung zwischen der Innenfläche des Spindelgehäuses und der Außenfläche der Spindelhülse eine kompakte und einfache Bauweise, ohne dass von außen eingreifende Verriegelungselemente erforderlich sind. Weiterhin ist die Steuerung der Verriegelungseinrichtung gegenüber dem Stand der Technik vereinfacht, da die Positionierung der Spindel durch die Lage der Vertiefungen in dem Gehäuse vorgegeben ist.

Eine besonders einfache Konstruktion und Steuerung des Spindelaggregats und insbesondere der Verriegelungseinrichtung ergibt sich, wenn der Verriegelungsmechanismus einen die Spindelhülse umgebenden Hohlkolben umfasst, der entlang der Spindelachse zwischen einer Verriegelungsstellung und einer Freigabestellung verschiebbar ist, um das Verriegelungselement in Eingriff mit der Vertiefung zu bringen bzw. freizugeben.

Dabei ist es besonders bevorzugt, dass der Hohlkolben verschiebbar ist zwischen einem ersten Anschlag der Spindelhülse, der die Freigabestellung des Hohlkolbens definiert, und einem zweiten Anschlag der Spindelhülse, der die Verriegelungsstellung des Hohlkolbens definiert. Hierdurch wird eine hohe Zuverlässigkeit und Genauigkeit des Verriegelungsmechanismus bei einfacher Konstruktion gewährleistet.

Gemäß einer Weiterbildung der vorliegenden Erfindung weist der zweite Anschlag der Spindelhülse horizontale Durchgangsbohrungen auf, in denen das Verriegelungselement verschiebbar aufgenommen ist. Hierdurch sind die Verriegelungselemente sicher in ihrer Position gehalten und können radial in ihre Verriegelungsposition verschoben werden, sobald der Hohlkolben an dem zweiten Anschlag der Spindelhülse anliegt.

Die Konstruktion und Steuerung des Spindelaggregats wird weiter vereinfacht, wenn der Hohlkolben durch den Verstellantrieb zum Verstellen der Spindelhülse in die Verriegelungsstellung bringbar ist. Dies bedeutet, dass gemäß der vorliegenden Erfindung kein eigener Verstellantrieb zum Verstellen des Verriegelungsmechanismus erforderlich ist, da dieser mit dem ohnehin vorhandenen Verstellantrieb zum Verstellen der Spindelhülse verschiebbar ist. Dabei ist es besonders bevorzugt, wenn der Hohlkolben unmittelbar durch einen durch den Verstellantrieb bereitgestellten Fluiddruck in dem Gehäuse beaufschlagbar und verschiebbar ist.

Mit Vorteil weist der Verriegelungsmechanismus eine Rückstelleinrichtung, insbesondere eine Rückstellfeder, zum Rückstellen des Hohlkolbens in die Freigabestellung auf. Dabei ist es besonders bevorzugt, dass die Rückstellkraft der Rückstelleinrichtung größer ist als der Verschiebewiderstand zum Verstellen der Spindelhülse. Hierdurch wird erreicht, dass der Hohlkolben des Verriegelungsmechanismus in der Freigabestellung verbleibt, bis die Spindelhülse ihre Arbeitsstellung erreicht hat, und erst anschließend in die Verriegelungsstellung verschoben wird, um das Verriegelungselement mit den Vertiefungen des Gehäuses in Eingriff zu bringen.

Um das Verschieben des Verriegelungselements in radialer Richtung zu erleichtern, verjüngt sich der Querschnitt des Verriegelungselements in radialer Richtung, d. h. in Richtung der Innenfläche des Gehäuses und/oder der Außenfläche der Spindelhülse, und ist insbesondere keilförmig. Ein besonders problemloses radiales Verschieben des Verriegelungselementes ergibt sich, wenn das Verriegelungselement gemäß einer Weiterbildung der Erfindung eine Kugel ist. Weiterhin kann die radiale Verschiebbarkeit des Verriegelungselements auch durch die Ausbildung der Vertiefungen und/oder des Kolbens verbessert werden, indem diese konische Abschnitte zum Betätigen des Verriegelungselementes aufweisen.

Gemäß einer Weiterbildung der Erfindung weist das Spindelgehäuse eine Vielzahl von Vertiefungen auf. Dabei können die Vertiefungen in einer Ebene senkrecht zur Spindelachse liegen, um eine sichere Verriegelung der Spindelhülse durch mehrere Vertiefungen gleichzeitig zu gewährleisten. Darüber hinaus können jedoch auch Vertiefungen in mehreren Ebenen senkrecht zur Spindelachse vorgesehen sein, um eine Verriegelung der Spindelhülse in unterschiedlichen Positionen innerhalb des Gehäuses zu ermöglichen.

Gemäß einer weiteren Zielrichtung der vorliegenden Erfindung ist das Verriegelungselement durch mindestens einen Sprengring gebildet. Hierdurch ergibt sich eine Reihe von Vorteilen. Zunächst ist ein Sprengring als Verriegelungselement durch Aufspreizen, beispeilsweise mittels des oben beschriebenen Kolbens, innerhalb seiner Ebene leicht in Eingriff mit den entsprechenden Vertiefungen im Gehäuse bringbar. Darüber hinaus kehrt der Sprengring nach dem Lösen der Spreizkraft infolge seiner eigenen, elastischen Rückstellwirkung in seine Ausgangsposition zurück, so dass keine zusätzlichen Rückstellmechanismen, wie z. B. Federn, erforderlich sind.

Ferner ergibt sich bei Einsatz eines Sprengringes als Verriegelungselement eine günstige Flächenpressung, insbesondere im Vergleich zu einer Mehrzahl einzelner Verriegelungselemente. Dies ermöglicht einen geringeren Verschleiß bzw. eine höhere Lebensdauer des Verriegelungsmechanismus bzw. des gesamten Spindelaggregats. Dabei ist zu berücksichtigen, dass der Verriegelungsmechanismus aufgrund der hohen Drehzahlen und Bohrkräfte des Spindelaggregats stark beansprucht wird.

Weiterhin ist ein Sprengring als Verriegelungselement nicht nur leicht zu montieren, sondern auch leicht bei Inspektionsund Wartungsarbeiten zu ersetzen, insbesondere im Vergleich zu Mehrzahl einzelner Verriegelungselemente.

Schließlich ist ein Sprengring einfach und kostengünstig herzustellen, ebenso wie entsprechende Vertiefungen im Gehäuse zur Aufnahme des Sprengringes.

Ferner ist es erfindungsgemäß bevorzugt, dass der Querschnitt des Sprengringes zumindest abschnittsweise Verjüngungen aufweist, um das Aufspreizen des Sprengringes in die Vertiefungen des Gehäuses zu begünstigen.

### Kurze Beschreibung der Zeichnungen

Im Folgenden werden unter Bezugnahme auf die beigefügten Zeichnungen bevorzugte Ausführungsformen der vorliegenden Erfindung näher erläutert und beschrieben. Es zeigen:
- Fig. 1: eine schematische Gesamtansicht einer Werkzeugmaschine mit einer Bearbeitungseinheit für die Bearbeitung plattenförmiger Werkstücke;
- Fig. 2: eine schematische Schnittansicht zweier Spindelaggregate in einer ersten Ausführungsform der vorliegenden Erfindung, mit einer Spindel in Ruhestellung und der anderen Spindel in Arbeitsstellung;
- Fig. 3: eine Detailansicht aus Fig. 2, welche die Verriegelungseinrichtung in Verriegelungsstellung bzw. in Freigabestellung zeigt;
- Fig. 4: eine schematische Schnittansicht zweier Spindelaggregate in einer zweiten Ausführungsform der vorliegenden Erfindung, mit einer Spindel in Ruhestellung und der anderen Spindel in Arbeitsstellung;
- Fig. 5: eine schematische, teilweise geschnittene Ansicht einer Spindelhülse aus Fig. 4, welche die Verriegelungseinrichtung in Freigabestellung zeigt;
- Fig. 6: eine schematische Draufsicht und eine schematische Schnittansicht eines Sprengringes als Verriegelungselement gemäß der zweiten Ausführungsform.

### Ausführliche Beschreibung bevorzugter Ausführungsformen der Erfindung

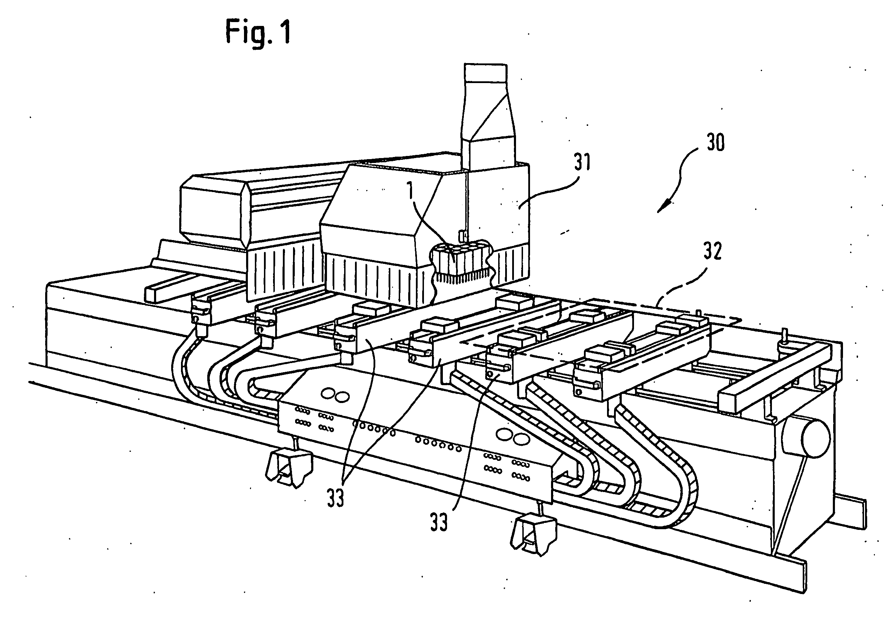

In den Fig. 1 bis 6 sind gleiche oder ähnliche Bauteile jeweils mit denselben Bezugszeichen gekennzeichnet.

Fig. 1 zeigt schematisch eine Gesamtansicht einer Werkzeugmaschine 30 mit einer Bearbeitungseinheit 31 zur Bearbeitung plattenförmiger Werkstücke 32. Das plattenförmige Werkstück 33 ist auf Vakuumsaugtraversen 33 der Werkzeugmaschine 30 gehalten. Die Bearbeitungseinheit 31 ist gegenüber dem Werkstück 32 in X-, Y- und Z-Richtung verfahrbar und umfasst mehrere Spindelaggregate 1.

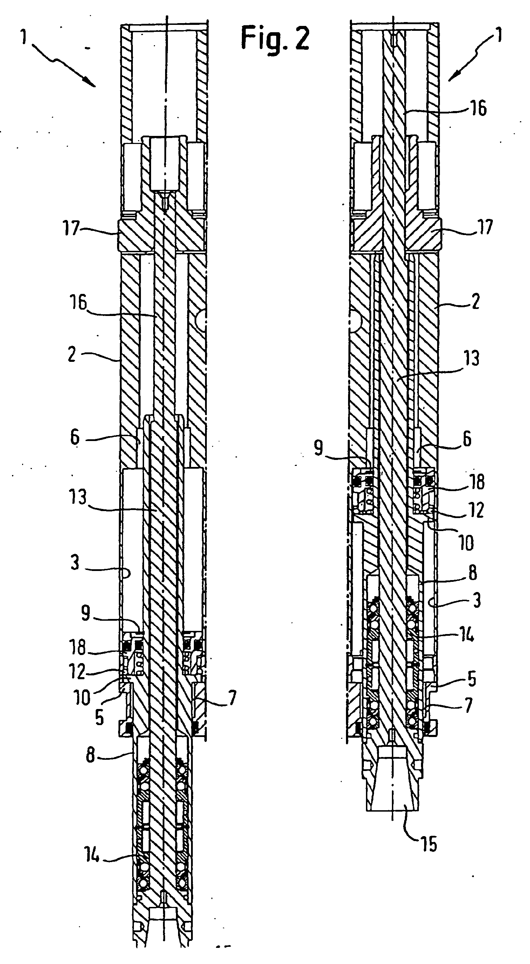

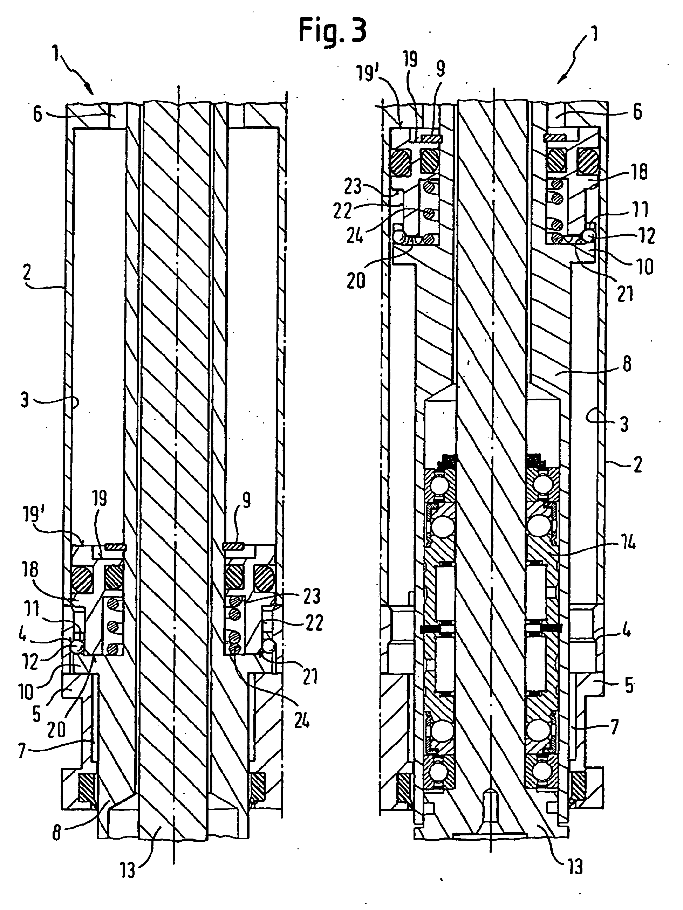

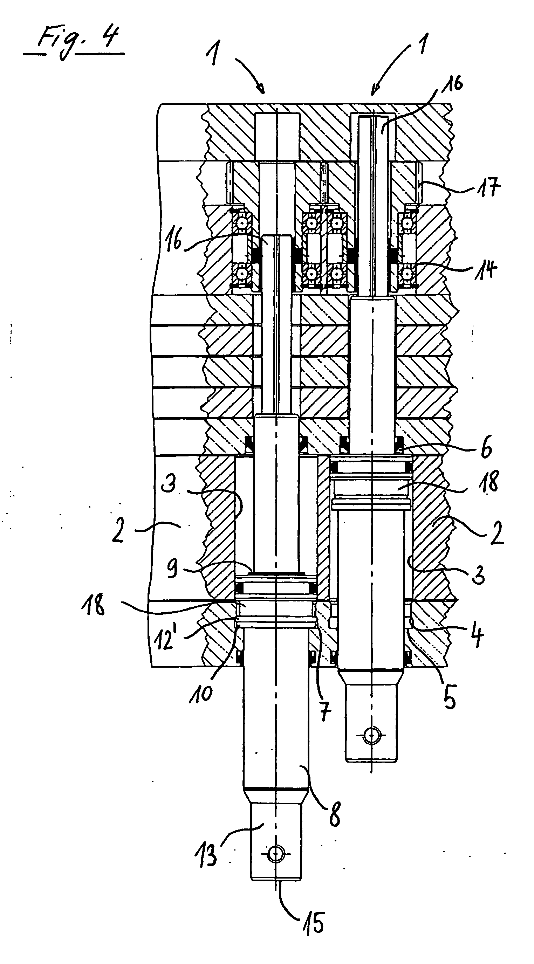

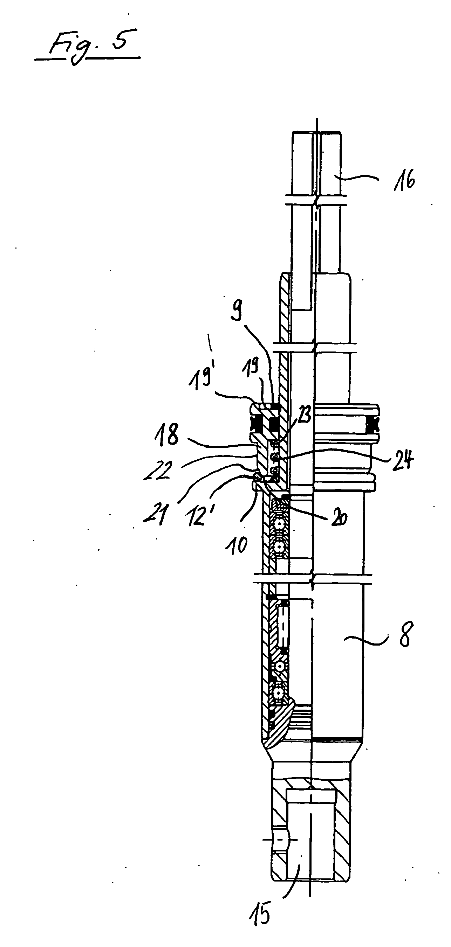

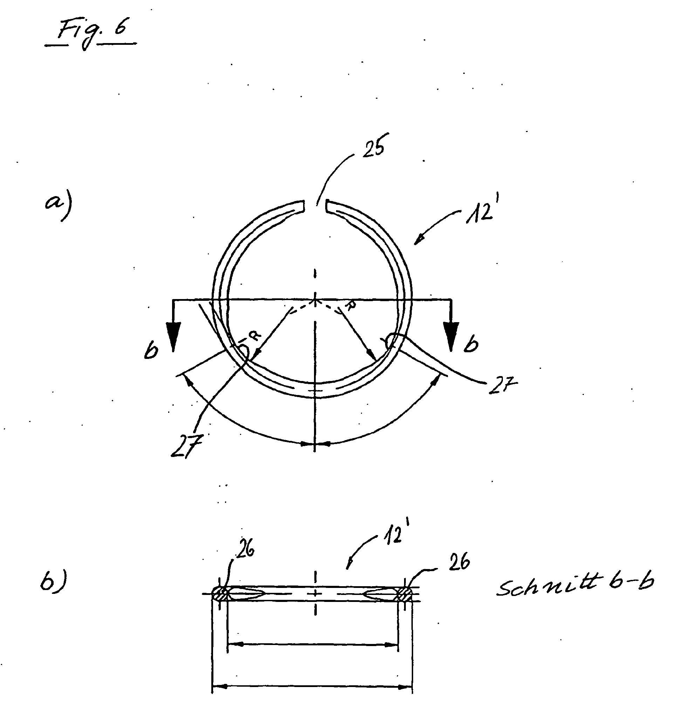

Die Fig. 2 und 3 zeigen schematisch den Aufbau von Spindelaggregaten 1 gemäß einer ersten Ausführungsform der vorliegenden Erfindung in einem vertikalen Schnitt entlang der Spindelachse, wobei jeweils zwei nebeneinander angeordnete Spindelaggregate 1 dargestellt sind, von denen sich eine Spindel in einer Arbeitsstellung und die andere Spindel in einer Ruhestellung befindet. Die in den Fig. 2 und 3 dargestellten Spindelaggregate 1 weisen jeweils dieselben Komponenten auf und unterscheiden sich lediglich durch deren Positionierung. Das Spindelaggregat 1 weist ein Gehäuse 2 mit einer Innenfläche 3 auf, in der eine tangential umlaufende, sich in radialer Richtung erstreckende Vertiefung 4 vorgesehen ist. Darüber hinaus besitzt das Gehäuse 2 einen stufenförmigen Anschlag 5.

In dem Gehäuse 2 ist eine Spindelhülse 8 aufgenommen, wobei zwischen der Spindelhülse und dem Gehäuse zwei Druckluftkammern 6, 7 vorgesehen sind. Die Spindelhülse 8 ist mit einem umlaufenden Segerring 9 und einem vorsprungartigen Anschlag 10 ausgestattet, der einen umlaufenden Wulst besitzt, in welchem radiale Durchgangslöcher 11 vorgesehen sind. In den Durchgangslöchern 11 sind in der vorliegenden ersten Ausführungsform jeweils Verriegelungskugeln 12 angeordnet.

In der Spindelhülse 8 ist eine Spindel 13 axialfest und drehfrei durch Kugellager 14 gelagert. Die Spindel besitzt eine Werkzeugaufnahme 15, in welche verschiedene Werkzeuge, insbesondere Bohrwerkzeuge, zur Bearbeitung des Werkstücks 32 eingesetzt werden können. Auf der der Werkzeugaufnahme 15 gegenüberliegenden Seite besitzt die Spindel einen Schaft 16, der einen polygonalen Querschnitt besitzt und axial verschiebbar in ein Stirnradgetriebe 17 eingreift.

Zwischen der Innenfläche 3 des Gehäuses 2 und der Außenfläche der Spindelhülse 8 ist in abgedichteter Weise ein Hohlkolben 18 vorgesehen, der eine erste obere Fläche 19, eine zweite obere Fläche 19', eine untere Fläche 20, einen konischen Abschnitt 21, eine Außenfläche 22 und eine Stützfläche 23 besitzt. Zwischen der unteren Fläche 20 des Hohlkolbens 18 und dem vorsprungartigen Anschlag 10 des Gehäuses 2 ist eine Spiralfeder 24 vorgesehen.

Nachfolgend werden das Zusammenwirken der einzelnen Komponenten und die Funktionsweise des Spindelaggregats 1 gemäß der in Fig. 2 und 3 gezeigten ersten Ausführungsform beschrieben. Die Spindelhülse 8 ist in dem Gehäuse 2 in axialer Richtung zwischen einer Ruhestellung und einer Arbeitsstellung verschiebbar. In der Arbeitsstellung liegt die Spindelhülse 8 mit ihrem Anschlag 10 an dem Anschlag 5 des Gehäuses 2 an, wie in dem linken Spindelaggregat der Fig. 2 und 3 dargestellt. In der Ruhestellung ist die Spindelhülse 8 so weit in das Gehäuse 2 eingefahren, dass die oberen Flächen 19, 19' des Hohlkolbens 18 an dem Gehäuse 2 bzw. dem Segerring 9 anliegen, wie in dem rechten Spindelaggregat 1 der Fig. 2 und 3 dargestellt.

Zum Verfahren der Spindelhülse von der Ruhestellung in die Arbeitsstellung wird Druckfluid, insbesondere Druckluft, in die Druckkammer 6 gefördert, so dass die oberen Flächen 19, 19' des Hohlkolbens 18 mit einem Druck beaufschlagt wird. Die resultierende Druckkraft wird von dem Hohlkolben 18 über die Spiralfeder 24 auf den Anschlag 10 der Spindelhülse 8 übertragen, so dass sich diese in axialer Richtung aus dem Gehäuse 2 herausbewegt. Dabei ist die Federsteifigkeit der Spiralfeder 24 bevorzugt derart ausgelegt, dass deren Rückstellkraft größer ist als der Verschiebewiderstand zum Verstellen der Spindelhülse. Auf diese Weise findet zunächst keine Relativverschiebung zwischen dem Hohlkolben 18 und der Spindelhülse 8 statt, so dass der Hohlkolben 18 die Spindelhülse 8 gewissermaßen vor sich herschiebt. Sobald der Anschlag 10 der Spindelhülse 8 den Anschlag 5 des Gehäuses 2 erreicht, befindet sich die Spindelhülse 8 in ihrer Arbeitsstellung. Da die Spindelhülse 8 nun nicht mehr weiter in axialer Richtung verschoben werden kann, überwindet die auf den Hohlkolben 18 aufgebrachte Druckluftkraft bei weiterer Steigerung des Luftdrucks die Rückstellkraft der Spiralfeder 24, so dass sich der Hohlkolben 18 in axialer Richtung der Spindelhülse 8 verschiebt, bis dieser mit seiner unteren Fläche 20 an dem Anschlag 10 der Spindelhülse 8 anliegt.

Bei dieser Verschiebung des Hohlkolbens 18 wird die Verriegelungskugel 12 mit der Vertiefung 4 der Innenfläche 3 des Gehäuses 2 in Eingriff gebracht. Dabei sorgt die konische Fläche 21 des Hohlkolbens 18 dafür, dass die Verriegelungskugel 12 während der Axialbewegung des Hohlkolbens 18 eine radial nach außen gerichtete Kraft erfährt und sich daher radial nach außen in die Vertiefung 4 verschiebt. Durch das Eingreifen der Verriegelungskugel 12 in die Vertiefung 4 findet eine axiale Verriegelung der Spindelhülse 8 in dem Gehäuse 2 statt, so dass die Spindelhülse 8 und mit dieser die Spindel 13 in axialer Richtung in der Arbeitsstellung fixiert ist.

Die eigentliche Bearbeitung des Werkstücks 32 durch das Spindelaggregat 1 findet nun durch eine Verschiebung der Bearbeitungseinheit 31 statt, wobei das Spindelaggregat 1 während der Bearbeitung gegenüber der Bearbeitungseinheit 31 unverschieblich bleibt. Nach Abschluss des Bearbeitungsvorgangs kann die Spindelhülse 8 und mit ihr die Spindel 13 wie folgt von der Arbeitsstellung in die Ruhestellung gefahren werden.

Zunächst wird die in der Druckkammer 6 vorhandene Druckluft abgelassen. Dies führt dazu, dass die Rückstellfeder 24 den Hohlkolben 18 von seiner Verriegelungsposition in seine Freigabeposition zurückführt, in welcher der Hohlkolben 18 mit seiner oberen Fläche 19 an dem Segerring 9 anliegt. Hierdurch wird die Verriegelung der Kugel 12 in der Vertiefung 4 gelöst, so dass die Kugel frei ist, sich radial nach innen zu bewegen. Nun wird die Druckkammer 7 mit Druckluft beaufschlagt, so dass der Anschlag 10 der Spindelhülse 8 mit einer axialen Druckkraft beaufschlagt wird, die in Richtung der Ruhestellung gerichtet ist. Durch diese Druckkraft wird die Spindelhülse 8 in Richtung der Ruhestellung verschoben, wobei die Verriegelungskugel 12 von ihrer Eingriffsposition mit der Vertiefung 4 in eine zurückgezogene Position geführt wird. Das Zurückführen der Verriegelungskugel 12 wird durch die konische Form der Vertiefung 4 ermöglicht, die dazu führt, dass die Kugel 12 mit einer axialen Verschiebung der Spindelhülse 8 in radialer Richtung nach innen gedrückt wird. Das Rückführen der Spindelhülse 8 in die Ruheposition ist abgeschlossen, sobald der Hohlkolben 18 mit seinen oberen Flächen an dem Gehäuse 2 bzw. dem Segerring 9 anliegt.

Fig. 4 zeigt schematisch den Aufbau von Spindelaggregaten 1 gemäß einer zweiten Ausführungsform der vorliegenden Erfindung in einem vertikalen Schnitt entlang der Spindelachse, wobei jeweils zwei nebeneinander angeordnete Spindelaggregate 1 dargestellt sind, von denen sich eine Spindel in einer Arbeitsstellung und die andere Spindel in einer Ruhestellung befindet. Ferner zeigt Fig. 5 eine schematische, teilweise geschnittene Ansicht einer Spindelhülse aus Fig. 4, welche die Verriegelungseinrichtung in Freigabestellung zeigt.

Die in den Fig. 4 und 5 dargestellten Spindelaggregate 1 weisen prinzipiell dieselben Komponenten wie die in Fig. 2 und 3 gezeigten Spindelaggregate auf, unterscheiden sich von diesen jedoch wie folgt. Anstelle der Verriegelungskugeln 12 besitzt das Spindelaggregat 1 gemäß der zweiten Ausführungsform einen Sprengring 12', der in Fig. 6 schematisch und beispielhaft in einer Draufsicht und einer Schnittansicht dargestellt ist. Der Sprengring 12' weist einen Querschnitt 26 auf, der durch eine Öffnung 25 unterbrochen ist. Darüber hinaus besitzt der Querschnitt 26 abschnittsweise Verjüngungen 27. Es ist jedoch selbstverständlich, dass der Sprengring 12' auch andere geeignete Querschnitte und/oder Formen besitzen kann.

Die Anordnung des Sprengringes 12' als Verriegelungselement in dem Spindelaggregat 1 ist anhand der Figuren 4 und 5 ersichtlich. Danach umgreift der Sprengring 12' die Spindelhülse 8 und liegt, analog zu den Verriegelungskugeln 12 der ersten Ausführungsform, zwischen dem Anschlag 10 und dem Hohlkolben 18.

Abweichend von der ersten Ausführungsform besitzt der Anschlag 10 in der zweiten Ausführungsform keine Durchgangslöcher 11 bzw. keine seitliche Führung für den Sprengring 12'.

Die Funktionsweise des Spindelaggregats 1 in der zweiten Ausführungsform ist ebenfalls im wesentlich analog zu der ersten Ausführungsform. Allerdings erfolgt das Festsetzen der Spindelhülse 8 in dem Gehäuse 2 nicht durch eine Verschiebung von Verriegelungskugeln 12, sondern durch ein Aufspreizen des Sprengringes 12'. Zu diesem Zweck wird der Hohlkolben 18 wie oben beschrieben mittels des Verstellmechanismus verschoben und spreizt während der Bewegung mittels des konischen Abschnitts 21 den Sprengring 12' auf. Durch das Aufspreizen greift der Sprengring 12' in die in dem Gehäuse vorgesehene Vertiefung 4 ein, so dass die Spindelhülse 8 gegenüber dem Gehäuse 2 sicher verriegelt wird.

Das Lösen der Verriegelung erfolgt in der zweiten Ausführungsform ebenfalls im wesentlichen wie in der ersten Ausführungsform. Eine Besonderheit besteht jedoch darin, dass der Sprengring 12' aufgrund seiner elastischen Verformung automatisch in seine Ausgangsposition zurückkehrt, sobald der Hohlkolben 18 zurückgefahren wird.

Die vorliegende Erfindung ist selbstverständlich nicht auf die vorstehend beispielhaft beschriebenen Verriegelungselemente beschränkt, sondern diese können, obgleich sie bevorzugt sind, vom Fachmann auch abgewandelt oder durch andere Elemente ersetzt werden.

## Patentansprüche

1. Spindelaggregat (1), insbesondere für die Bearbeitung plattenförmiger Werkstücke (32), umfassend ein Gehäuse (2), mindestens eine darin angeordnete Spindelhülse (8), in der jeweils eine Spindel (13) axialfest und drehfrei gelagert ist, einen Verstellantrieb zum Verstellen der Spindelhülse (8) zwischen einer Ruhestellung und einer Arbeitsstellung, und eine Verriegelungseinrichtung zum Festsetzen der Spindelhülse (8) in dem Gehäuse (2),
**dadurch gekennzeichnet, dass**
- die Verriegelungseinrichtung einen Verriegelungsmechanismus (18, 24) und zumindest ein von diesem betätigbares Verriegelungselement (12) aufweist;
- eine der Spindelhülse zugewandte Innenfläche (3) des Gehäuses zumindest eine Vertiefung (4) aufweist;
- das Verriegelungselement zwischen der Innenfläche (3) des Gehäuses und der Außenfläche der Spindelhülse (8) vorgesehen ist und mit den Vertiefungen (4) des Gehäuses in Eingriff bringbar ist; und
- der Verriegelungsmechanismus (18, 24) zwischen der Außenfläche der Spindelhülse (8) und dem Verriegelungselement (12) angeordnet ist.

2. Vorrichtung nach Anspruch 1, **dadurch gekennzeichnet, dass** der Verriegelungsmechanismus (18, 24) einen die Spindelhülse (8) umgebenden Hohlkolben (18) umfasst, der entlang der Spindelachse zwischen einer Verriegelungsstellung und einer Freigabestellung verschiebbar ist, um das Verriegelungselement (12) in Eingriff mit der Vertiefung (4) zu bringen bzw. freizugeben.

3. Vorrichtung nach Anspruch 2, **dadurch gekennzeichnet, dass** der Hohlkolben (18) verschiebbar ist zwischen einem ersten Anschlag (9) der Spindelhülse (8), der die Freigabestellung des Hohlkolbens definiert, und einem zweiten Anschlag (10) der Spindelhülse (8), der die Verriegelungsstellung des Hohlkolbens definiert.

4. Vorrichtung nach Anspruch 3, **dadurch gekennzeichnet, dass** der zweite Anschlag (10) der Spindelhülse (8) horizontale Durchgangsbohrungen (11) aufweist, in denen das verriegelungselement (12) verschiebbar aufgenommen ist.

5. Vorrichtung nach einem der Ansprüche 2 bis 4, **dadurch gekennzeichnet, dass** der Hohlkolben (18) durch den Verstellantrieb zum Verstellen der Spindelhülse (8) in die Verriegelungsstellung bringbar ist.

6. Vorrichtung nach einem der vorhergehenden Ansprüche, **dadurch gekennzeichnet, dass** der Verstellantrieb in dem Gehäuse (2) selektiv einen Fluiddruck bereitstellt, , wobei insbesondere der Hohlkolben (18) mittels des durch den Verstellantrieb bereitgestellten Fluiddrucks in dem Gehäuse (2) verschiebbar ist.

7. Vorrichtung nach einem der Ansprüche 2 bis 6, **dadurch gekennzeichnet, dass** der Verriegelungsmechanismus (18, 24) eine Rückstelleinrichtung, insbesondere eine Feder (24), zum Rückstellen des Hohlkolbens (18) in die Freigabestellung aufweist.

8. Vorrichtung nach Anspruch 6, **dadurch gekennzeichnet, dass** die Rückstellkraft der Rückstelleinrichtung (24) größer ist als der Verschiebewiderstand zum Verstellen der Spindelhülse (8).

9. Vorrichtung nach einem der vorhergehenden Ansprüche, **dadurch gekennzeichnet, dass** das Verriegelungselement (12) sich in Richtung der Innenfläche (3) des Gehäuses (2) und/oder der Außenfläche der Spindelhülse (8) im Querschnitt verjüngt, insbesondere keilförmig ist.

10. Vorrichtung nach einem der vorhergehenden Ansprüche, **dadurch gekennzeichnet, dass** das Verriegelungselement (12) eine Kugel ist.

11. Vorrichtung nach einem der vorhergehenden Ansprüche, **dadurch gekennzeichnet, dass** die Vertiefungen (4) und/oder der Hohlkolben (18) konische Abschnitte (21) zum Betätigen des verriegelungselementes (12) aufweisen.

12. Vorrichtung nach einem der vorhergehenden Ansprüche, **dadurch gekennzeichnet, dass** das Gehäuse (2) eine Vielzahl von Vertiefungen (4) aufweist.

13. Vorrichtung nach einem der Ansprüche 2 bis 12, **dadurch gekennzeichnet, dass** die Vertiefungen (4) derart ausgelegt sind, dass die Verriegelungselemente (12) so weit darin aufnehmbar sind, bis der Hohlkolben (18) in der Verriegelungsstellung ist.

14. Vorrichtung nach einem der vorhergehenden Ansprüche, **dadurch gekennzeichnet, dass** das Verriegelungselement durch mindestens einen Sprengring gebildet ist.

15. Vorrichtung nach Anspruch 14, **dadurch gekennzeichnet, dass** der Querschnitt des Sprengringes zumindest abschnittsweise Verjüngungen aufweist, um das Aufspreizen des Sprengringes in die Vertiefungen (4) des Gehäuses (2) zu begünstigen.

## Claims

1. Spindle unit (1), in particular for machining plate-like workpieces (32), comprising a housing (2), at least one spindle sleeve (8) arranged therein, in which in each case a spindle (13) is mounted to be axially fixed and free of rotation, an adjusting drive for adjusting the spindle sleeve (8) between a rest position and a working position, and a locking device for fixing the spindle sleeve (8) in the housing (2), **characterised in that**
- the locking device has a locking mechanism (18, 24) and at least one locking element (12) which can be actuated by the latter;
- an inner surface (3) of the housing facing the spindle sleeve has at least one depression (4);
- the locking element is provided between the inner surface (3) of the housing and the outer surface of the spindle sleeve (8) and can be engaged with the depressions (4) of the housing; and
- the locking mechanism (18, 24) is arranged between the outer surface of the spindle sleeve (8) and the locking element (12).

2. Device according to claim 1, **characterised in that** the locking mechanism (18, 24) comprises a tubular piston (18) surrounding the spindle sleeve (8) which can be displaced along the spindle axis between a locking position and a release position in order to engage the locking element (12) with the depression (4) or to release it.

3. Device according to claim 2, **characterised in that** the tubular piston (18) can be displaced between a first stop (9) of the spindle sleeve (8), which defines the release position of the tubular piston, and a second stop (10) of the spindle sleeve (8), which defines the locking position of the tubular piston.

4. Device according to claim 3, **characterised in that** the second stop (10) of the spindle sleeve (8) has horizontal passage bores (11), in which the locking element (12) is received in displaceable manner.

5. Device according to one of claims 2 to 4, **characterised in that** the tubular piston (18) can be introduced into the locking position by the adjusting drive for adjusting the spindle sleeve (8).

6. Device according to one of the preceding claims, **characterised in that** the adjusting drive in the housing (2) selectively provides a fluid pressure, wherein in particular the tubular piston (18) can be displaced in the housing (2) by means of the fluid pressure provided by the adjusting drive.

7. Device according to one of claims 2 to 6, **characterised in that** the locking mechanism (18, 24) has a restoring device, in particular a spring (24), for restoring the tubular piston (18) to the release position.

8. Device according to claim 6, **characterised in that** the restoring force of the restoring device (24) is greater than the displacement resistance for adjusting the spindle sleeve (8).

9. Device according to one of the preceding claims, **characterised in that** the locking element (12) tapers in cross-section in the direction of the inner surface (3) of the housing (2) and/or the outer surface of the spindle sleeve (8), in particular is wedge-shaped.

10. Device according to one of the preceding claims, **characterised in that** the locking element (12) is a ball.

11. Device according to one of the preceding claims, **characterised in that** the depressions (4) and/or the tubular piston (18) have conical sections (21) to actuate the locking element (12).

12. Device according to one of the preceding claims, **characterised in that** the housing (2) has a plurality of depressions (4).

13. Device according to one of claims 2 to 12, **characterised in that** the depressions (4) are designed such that the locking elements (12) can be received therein until the tubular piston (18) is in the locking position.

14. Device according to one of the preceding claims, **characterised in that** the locking element is formed by at least one spring ring.

15. Device according to claim 14, **characterised in that** the cross-section of the spring ring has tapering at least in sections in order to favour expansion of the spring ring into the depressions (4) of the housing (2).

## Revendications

1. Unité à broches (1), en particulier pour l'usinage de pièces d'oeuvre (32) en forme de plaques, comprenant un boîtier (2), au moins une douille de broche (8) y étant disposée, dans chacune desquelles une broche (13) est montée, de façon bloquée axialement et avec une liberté de rotation, un entraînement de manoeuvre pour manoeuvrer la douille de broche (8) entre une position de repos et une position de travail, et un dispositif de verrouillage, pour fixer la douille de broche (8) dans le boîtier (2),
**caractérisée en ce que**
- le dispositif de verrouillage présente un mécanisme de verrouillage (18, 24) et au moins un élément de verrouillage (12) actionnable par celui-ci ;
- une face intérieure (3), tournée vers la douille de broche, du boîtier présentant au moins un cavités (4) ;
- l'élément de verrouillage est prévu entre la face intérieure (3) du boîtier et la face extérieure de la douille de broche (8), et est susceptible d'être mis en prise avec les cavités (4) du boîtier ; et
- le mécanisme de verrouillage (18, 24) est disposé entre la face extérieure de la douille de broche (8) et l'élément de verrouillage (12).

2. Dispositif selon la revendication 1, **caractérisé en ce que** le mécanisme de verrouillage (18, 24) comprend un piston creux (18) entourant la douille de broche (8), déplaçable le long de l'axe de broche, entre une position de verrouillage et une position de libération, pour mettre en prise l'élément de verrouillage (12) avec la cavité (4) ou l'en libérer.

3. Dispositif selon la revendication 2, **caractérisé en ce que** le piston creux (18) est déplaçable entre une première butée (9) de la douille de broche (8), qui définit la position de libération du piston creux, et une deuxième butée (10) de la douille de broche (8), qui définit la position de verrouillage du piston creux.

4. Dispositif selon la revendication 3, **caractérisé en ce que** la deuxième butée (10) de la douille de broche (8) présente des perçages de passage (11) horizontaux, dans lesquels l'élément de verrouillage (12) est logé de façon à permettre un déplacement.

5. Dispositif selon l'une des revendications 2 à 4, **caractérisé en ce que** le piston creux (18) est susceptible d'être mis à la position de verrouillage au moyen de entraînement de manoeuvre servant à manoeuvrer la douille de broche (8).

6. Dispositif selon l'une des revendications précédentes, **caractérisé en ce que** entraînement de manoeuvre dans le boîtier (2) fournit sélectivement une pression de fluide, sachant qu'en particulier, le piston creux (18) est déplaçable dans le boîtier (2) au moyen de la pression de fluide fournie par l'entraînement de manoeuvre.

7. Dispositif selon l'une des revendications 2 à 6, **caractérisé en ce que** le mécanisme de verrouillage (18, 24) présente un dispositif de rappel, en particulier un ressort (24), pour rappeler le piston creux (18) à la position de libération.

8. Dispositif selon la revendication 6, **caractérisé en ce que** la force de rappel du dispositif de rappel (24) est supérieure à la résistance de déplacement lors de la manoeuvre de la douille de broche (8).

9. Dispositif selon l'une des revendications précédentes, **caractérisé en ce que** la section transversale de l'élément de verrouillage (12) va en s'effilant dans la direction de la face intérieure (3) du boîtier (2) et/ou de la face extérieure de la douille de broche (8), en particulier en évoluant en forme de coin.

10. Dispositif selon l'une des revendications précédentes, **caractérisé en ce que** l'élément de verrouillage (12) est une bille.

11. Dispositif selon l'une des revendications précédentes, **caractérisé en ce que** les cavités (4) et/ou le piston creux (18) présentent des tronçons (21) coniques, pour l'actionnement de l'élément de verrouillage (12).

12. Dispositif selon l'une des revendications précédentes, **caractérisé en ce que** le boîtier (2) présente une pluralité de cavités (4).

13. Dispositif selon l'une des revendications 2 à 12, **caractérisé en ce que** les cavités (4) sont conçues de manière que les éléments de verrouillage (12) puissent y être logés, jusqu'à un degré auquel le piston creux (18) se trouve à la position de verrouillage.

14. Dispositif selon l'une des revendications précédentes, **caractérisé en ce que** l'élément de verrouillage est formé par au moins un circlip.

15. Dispositif selon la revendication 14, **caractérisé en ce que** la section transversale du circlip présente, au moins par tronçons, des effilements, pour favoriser l'écartement du circlip afin qu'il pénètre dans les cavités (4) du boîtier (2).
